# EUROPÄISCHE PATENTSCHRIFT

(11) **EP 0 381 968 B1**
(45) Veröffentlichungstag und Bekanntmachung des Hinweises auf die Patenterteilung: **29.06.1994**
(21) Anmeldenummer: 90101061.1
(22) Anmeldetag: 19.01.1990
(51) Int. Cl.: C08J 7/14

(54) **Verfahren zur Vorbereitung von Werkstücken aus Faserverbundwerkstoffen**
Process for the pretreatment of fibre composite products
Procédé pour le prétraitement de produits composites contenant des fibres

(30) Priorität: 08.02.1989 DE 3903601
(43) Veröffentlichungstag der Anmeldung: 16.08.1990
(73) Patentinhaber: Daimler-Benz Aerospace Airbus Gesellschaft mit beschränkter Haftung, 21129 Hamburg (DE)
(72) Erfinder: Matz, Christoph, Dr., D-2900 Oldenburg (DE)
(74) Vertreter: Hansmann, Dierk, Dipl.-Ing.

(56) Entgegenhaltungen:
- GB-A- 1 256 649

## Beschreibung

Die Erfindung betrifft ein Verfahren zur Vorbereitung von Werkstücken aus Faserverbundwerkstoffen, insbesondere vor dem Verkleben, bei dem die zu betreffenden Oberflächenbereiche einer naßchemischen Behandlung unterzogen werden.

Bei der Vorbehandlung von Werkstücken aus Faserverbundwerkstoffen, die durch Verkleben miteinander verbunden werden sollen, werden heute überwiegend mechanisch abrasive Bearbeitungsverfahren eingesetzt, die einen relativ hohen Kontrollaufwand erfordern, um die nötigen Reproduzierbarkeit der Oberflächengüte der zu fügenden Werkstücke zu gewährleisten, durch die allein eine optimale Haftfestigkeit der Verklebung garantiert ist. Auf der anderen Seite kann bei einer derartigen mechanischen Vorbehandlung nicht immer davon ausgegangen werden, daß die Festigkeitseigenschaften der so vorbehandelten Werkstücke unbeeinträchtigt bleiben.

Eine andere Möglichkeit, eine rückstandsfreie, reproduzierbare Oberfläche zu erzielen, wie sie für das Verkleben benötigt wird, kann unter Umständen dadurch gegeben sein, daß das aus der Herstellung des Faserverbund-Werkstückes noch vorhandene Abreißgewebe erst unmittelbar vor dem Verkleben entfernt wird. Dieses Verfahren ist jedoch nicht universell einsetzbar und seine Zuverlässigkeit muß deshalb für jede vorgesehene Kombination aus Faserverbundwerkstoff und Klebstoff neu nachgewiesen werden. Insbesondere bei Faserverbundwerkstoffen mit verbesserten Festigkeitseigenschaften führt dieses Verfahren überdies häufig zu nur unbefriedigenden Ergebnissen.

Schließlich ist bereits versucht worden, naßchemische Vorbehandlungsverfahren der eingangs genannten Art anzuwenden. Diese verliefen bisher aber entweder vergleichsweise erfolglos oder aber ihrer Einführung in den Produktionsprozeß standen, wie im Fall einer Anwendung von Chromschwefelsäure zu diesem Zweck, arbeitshygienische Gesichtspunkte entgegen.

Aufgabe der Erfindung ist es daher, ein Verfahren der eingangs genannten Art so auszubilden, daß mit seiner Hilfe eine reproduzierbare Vorbehandlung von Werkstückoberflächen aus Faserverbundwerkstoff auf chemischem Wege möglich ist, ohne daß hierzu Substanzen erforderlich sind, deren Einsatz in großem Maßstab aus arbeitshygienischen Gründen bedenklich erscheint.

Die Erfindung löst diese Aufgabe durch ein Verfahren, bei dem die naßchemische Vorbehandlung mit einer wäßrigen Lösung erfolgt, die einen Anteil an Peroxodisulfat-( S₂O₈-) Ionen enthält. VorzugsweiSe findet dabei eine wäßrige Ammoniumperoxodisulfat [(NH₄)₂S₂O₈] Lösung Anwendung, deren Konzentration bei der bevorzugten Ausführungsform des erfindungsgemäßen Verfahrens bei etwa 75g/l liegt.

Ein solches Verfahren ist im Prinzip aus der GB-A-1 256 649 bekannt. Mit diesem bekannten Verfahren sollen die Oberflächen von Polyolefinen, wie beispielsweise Polyethylen, so vorbereitet werden, daß sie eine verbesserte Haftfähigkeit aufweisen, wenn sie bedruckt werden, mit Farb- oder Metallüberzügen versehen werden oder mit anderen Oberflächen verklebt werden. Insbesondere sollen mit diesem bekannten Verfahren Folien, Filme und Fasern aus derartigen Materialien ihren adhäsiven Eigenschaften verbessert werden. Die Durchführung des bekannten Verfahrens erfolgt dabei in der Regel bei Temperaturen, die oberhalb der Raumtemperatur, vorzugsweise bei etwa 50°C liegen und häufig unter Verwendung von aktivierenden Zusätzen aus Metallsalzen.

Durch die reaktive Modifizierung der zu verbindenden Werkstückoberflächen erreichen die mittels Verklebens hergestellten Komponenten ausgezeichnete Festigkeitseigenschaften, wobei sich überraschend gezeigt hat, daß sich die Verklebungen zugleich äußerst resistent gegenüber klimatischen Einflüssen, insbesondere Warmfeuchtigkeit, verhalten.

Dies zeigt auch die mechanische Prüfung von Laborproben, bei denen es sich um einfach überlappte Zugscherproben aus karbonfaserverstärkten Komponenten handelte, deren Oberflächen vor ihrer Verklebung mit einem handelsüblichen Klebstoff (Hysol EA 9321) auf verschiedene Weise mechanisch oder naßchemisch vorbehandelt wurden und bei der die verklebten Probekörper bis zur Sättigung feuchtwarmen Bedingungen ausgesetzt waren (Wasser 70° C). Diejenigen Probekörper, die mit einer 7,5-%-igen wäßrigen Lösung aus Ammoniumperoxodisulfat oxidativ vorbehandelt wurden, wiesen nicht nur von allen untersuchten Probenkörpern die höchsten Festigkeitswerte im Zugversuch auf, vielmehr zeigte sich anhand der Bruchflächenmorphologie, daß bei diesen Proben auch die größten Anteile an Kohäsionsbruch vorlagen. Diese Ergebnisse gelten sowohl für den nicht ausgelagerten Zustand als auch bei Auslagerung unter den angegebenen Warmfeuchtbedingungen. Der hohe Anteil an Kohäsionsbruch auch gerade unter diesen Bedingungen macht deutlich, daß durch die naßchemische Vorbehandlung nach dem angegebenen Verfahren erreicht wird, daß die Fügeflächen weitgehend unempfindlich gegenüber klimatischen Belastungen sind.

Die Vorbehandlung der Fügeflächen kann dabei entweder durch Eintauchen der Werkstücke in die Lösung erfolgen oder dadurch, daß die Werkstücke mit der Lösung besprüht werden bzw. daß das Werkstück mit einer thixotropierten Paste bestrichen wird, die Peroxodisulfat-Ionen enthält. Anschließend ist das Werkstück gründlich zu spülen und zu trocknen.

Abschließend sei angemerkt, daß das angegebene Verfahren auch für eine Vorbehandlung von solchen Werkstücken aus Faserverbundstoff geeignet ist, die anschließend mit einer Beschichtung, beispielsweise als Oberflächenschutz, versehen werden sollen.

## Patentansprüche

1. Verfahren zur Vorbereitung von Werkstücken aus Faserverbundwerkstoffen, insbesondere vor dem Verkleben, bei dem die betreffenden Oberflächenbereiche einer naßchemischen Behandlung unterzogen werden, dadurch gekennzeichnet, daß die Behandlung mit einer wäßrigen Lösung erfolgt, die einen Anteil an Peroxodisulfat-(S₂O₈-) Ionen enthält.

2. Verfahren nach Anspruch 1, dadurch gekennzeichnet, daß die Lösung Ammoniumperoxodisulfat [(NH₄)₂S₂O₈] enthält.

3. Verfahren nach Anspruch 2, dadurch gekennzeichnet, daß die Anteile des Ammoniumperoxodisulfats in der Lösung etwa 75g/l beträgt.

## Claims

1. Method for preparing workpieces of composite fibrous materials, in particular before bonding, in which the surface areas concerned are subjected to a wet chemical treatment, characterized in that the treatment is carried out with an aqueous solution containing a proportion of peroxodisulphate-(S₂O₈-) ions.

2. Method according to claim 1, characterised in that the solution contains ammonium peroxodisulphate [(NH₄)₂S₂O₈].

3. Method according to claim 2, characterised in that the solution contains approximately 75 g/l of ammonium peroxodisulphate.

## Revendications

1. Procédé pour préparer des pièces en matière composite renforcées par des fibres notamment avant le collage procédé selon lequel on soumet les zones concernées de la surface a un traitement chimique par voie humide, caractérisé en ce que le traitement se fait dans une solution aqueuse contenant une partie d'ions de peroxodisulfate (S₂O₈-).

2. Procédé selon la revendication 1, caractérisé en ce que la solution contient du peroxodisulfate d'ammonium [(NH₄)₂S₂O₈].

3. Procédé selon la revendication 2, caractérisé en ce que la teneur de peroxodisulfate d'ammonium dans la solution est de l'ordre de 75 g/l.
